# EUROPEAN PATENT SPECIFICATION

(11) **EP 2 725 949 B1**
(45) Date of publication and mention of the grant of the patent: **22.02.2017**
(21) Application number: 12800667.3
(22) Date of filing: 15.06.2012
(51) Int. Cl.: A47J 31/06, A23F 5/24, A47J 31/08, A47J 31/00, A47J 31/057, A47J 31/36

(54) **SINGLE CUP BEVERAGE INGREDIENT FILTER BASKET AND METHOD OF USING SAME**
EINZELBECHER-GETRÄNKEZUTATENFILTERKORB UND VERWENDUNGSVERFAHREN DAFÜR
PANIER-FILTRE D'INGRÉDIENT DE BOISSON POUR TASSE UNIQUE ET SON PROCÉDÉ D'UTILISATION

(30) Priority: 16.06.2011 US 201113161785; 25.05.2012 US 201213480788
(43) Date of publication of application: 07.05.2014
(73) Proprietor: VIP Resort Destinations, Inc., Orlando, FL 32809 (US)
(72) Inventor: GRAHAM, William, R., Dayton, OH 45402 (US); OTTO, Jay, D., Dayton, OH 45409 (US)
(74) Representative: Balder IP Law, S.L.
(86) International application number: PCT/IB2012/001631
(87) International publication number: WO 2012/172434

(56) References cited:
- WO-A1-01/60712
- WO-A1-01/60712
- WO-A2-2011/031294
- DE-U1-202005 014 128
- US-A- 5 738 786
- US-A1- 2005 051 478
- US-A1- 2010 288 131
- US-A1- 2010 288 131
- US-A1- 2010 288 133
- US-B1- 6 189 438

## Description

### BACKGROUND OF THE INVENTION

### Field of Invention

This invention relates to filter cups adapted for use in coffee makers of the high pressure high heat single cup type coffee makers, such as, Keurig, Cuisinart, Tassimo and Mr. Coffee single cup types, and to a method and apparatus for using the same.

### PRIOR ART

Drip-type electric brewing machines have been used as an efficient means for making coffee. The coffee brewing machine typically has a cold water reservoir, an electric resistance heating element for heating the water, and a reusable plastic brew basket for holding ground coffee in a paper coffee filter. To make coffee, cold water is poured into the water reservoir and ground coffee is placed in a coffee filter, which is in turn placed in the brew basket. The cold water is heated by the electric heating element, and the heated water then saturates the ground coffee. The brewed coffee then drips out into a pot below the brew basket. The paper filter and used coffee grounds are taken out of the plastic brew basket and discarded. Then, the brew basket and coffee pot are cleansed for re-use.

Recently, there has been a trend to provide a single use disposable brew pod for a single cup electric coffee brewing machine that is designed for brewing a single cup of coffee directly into a coffee cup. This was designed with the thought of providing a quick and convenient cup of coffee on demand.

A trendy brand of pod has been introduced by Keurig, Inc. in which a single use coffee pod works within its beverage pod receiver. This is seen in U.S. Patent 7,513,192.
Other such coffee makers of using single cup pods include Cuisinart, Tassimo and Mr. Coffee types typically which also employ filter cups which are part of a sealed pod which include ground coffee therein. The pods typically have a polymer filter which is adhered to the wall of the plastic pod. The filter in such pods is plastic to withstand the high pressure and heat which is posed by a single stream of intense water pressure, as opposed to conventional drip coffee makers. These pods pose a significant environmental issue and are very costly and a health concern.

In addition to these pods, other solutions have been tried. For example, one solution uses a technique of providing a mental filter basket which is removably enclosed in a pod having an opening on a top and bottom. This device must be washed out which is difficult to do as the area within such pod is less than a couple of inches and it is difficult to access for purposes of cleaning. Moreover, this takes away from the convenience of single cup brewing.

Another device attempted to use a non metal disposable filter which has a bottom cup and an upper lid and hingedly adhered at an edge to the cup and which can be filled with ground coffee and then enclosed in a snap fit manner within a second plastic cup having a small opening therein and a lid connected to the second cup, the lid having a hole therein to receive the conduit of the coffee maker. This too has flaws. The filter is expensive to make and is awkward to maintain open for filling the bottom cup with coffee.

WO 01/67012 Keurig, Inc describes an example of a non-refillable filter cartridge.

DE 20 2005 014 128 describes a single cup beverage ingredient containing filter basket for use over an ordinary cup. The basket takes the form of a support ring with crossbars that can support a disk of filter paper. It provides a re-closable top.

Prior alternatives result in an inferior brew. This is due to the fact that the stream of high pressure causes a channel to be formed centrally through the pod and grounds as this is the path of least resistance. Accordingly, a weak cup of coffee is provided.

Despite these shortcomings, the consumer has found the single cup coffee brewing a desirable method for brewing coffee. There is a need for a more desirable high pressure single cup filter which overcomes the deficiencies in the art. The instant invention provides a solution which overcomes these prior deficiencies.

### SUMMARY OF THE INVENTION

It is an object of the invention to provide new and improved high pressure filter cup adapted for use in single cup type coffee makers.

It is another object to provide a method of using the same for brewing beverages.

It is a further object to minimize waste in brewing single cup coffee.

It is another object to improve the efficiency of a single use coffee machine.

It is a more specific object of the invention to provide a single use filter in a reusable brew basket.

Still another object of the invention is to provide a single use filter, a reusable brew basket for a high a pressure high heat electric coffee brewing machine that is designed for brewing a single cup of coffee directly into a coffee cup.

Further objects of the invention are to avoid the disadvantages of the prior art and to obtain such other advantages as will appear as the description proceeds.

Another aspect of the invention includes a single cup beverage ingredient containing filter basket for use in a single cup brewing machine, comprising:
a filter retainer having an upper end with an open top and a bottom end including an opening therein;
an insert having an upper collar having a diameter less than that of said upper end of the said retainer to fit therein and having a lower extension which is dimensionally proportioned to press-fit a filter (30) disposed between the filter retainer and the insert, within the said filter retainer to retain the filter between the said insert and said filter retainer yet not so tight between the insert and retainer as to substantially restrict fluid flow through sides of the filter and cause undue pressure on a bottom of the filter in use; and
a top having an outer perimeter lip portion of a diameter and configuration positionable to form a closure about the said upper end (16) of the said filter retainer when disposed thereagainst.

The invention also includes a method of use and a combination of the filter basket and a filter as defined in the claims.

In this way, a single-use filter can be employed with coffee or other beverage ingredient therein and discarded after its use. The upper collar also can include a peripheral lip portion of a diameter at least that of the upper end of the retainer, and preferably larger, to aid in removal of the insert. Further, the lower collar portion of the top and the collar of the insert can be formed with a complementary detent mechanism to snap fit together and secure the two together for use and removal. An edge of either of the peripheral lip of the insert or the lip portion of the top can be recessed or extended (in the form of a tab) to aid in separation of the two once connected.

A preferred method of brewing a single cup of coffee comprises the steps of: providing an electric coffee brewing machine; providing a reusable brew basket having a filter retainer having upper end having open top and a bottom including an opening therein, an insert having an upper collar of a less than the diameter than the upper end of the retainer to fit therein and having a lower extension or end which when a filter is disposed between the retainer and the insert, the insert press-fits the filter within the retainer to retain the filter therebetween yet not so tight as to substantially restrict fluid flow through sides of the filter and thus cause undue pressure on a bottom of the filter, and a top having an outer perimeter lip portion of at least that of the diameter of the upper end of the retainer and a lower collar portion of a diameter less than the diameter of the upper collar and configured to secure the insert. The filter is held not so tight between the insert and retainer as to substantially restrict fluid flow through sides of the filter. As so assembled with the insert and filter within the retainer, a beverage forming ingredient is poured therein. The method inserts a single-use coffee filter into the retainer, placing the insert into the filter in a manner to cause the same to be press-fit between the retainer and insert, pouring coffee into the filter, connecting the top onto the retainer such that the lower collar portion press-fits to the insert, inserting the brew basket into the electric coffee brewing machine; brewing a single cup of coffee with the electric coffee brewing machine. The method further includes disassembling the basket, removing the filter with coffee therein and discarding the same while retaining the basket for reuse.

Advantageously, the filter is at least about 30-32 pound basis weight has a substantially planar base portion having a rounded periphery, the base portion having an inside surface for receipt of beverage forming ingredient, and a resilient, substantially annular sidewall portion which extends upwardly and radially outwardly from the rounded periphery of the planar base portion, the annular sidewall portion having an inner surface for receipt of beverage forming ingredient and an outside surface for contacting the retainer and wherein the annular sidewall includes a plurality of ridges extending radially outwardly and valleys extending radially inwardly, the plurality of ridges and valleys cooperating when press-fit between the insert and retainer to enhance the flowability of liquid through the filter. The filter can preferably be made of cellulose fiber from chemically prepared wood from a wet crepe filter paper machine strength and flow rate.

Filter cups as described are prepared by means of apparatus which includes a device for assembling a plurality of sheets of filter paper into a composite web, and in a suitably humid environment for the web formation, a die for cutting discs of at least about 30 lb weight from the web and forming a central portion larger than the opening of bottom of the retainer and less than the inner diameter of the retainer and also a side wall having ridges and valleys about the the central portion wherein each ridge and valley spacing are such as to aid supportive retention of the filter between the filter when press-fit therebetween and enhance the flowability of liquid through the filter.

The filters can be formed by die stretching the bottom portion in a manner to set the filters in the desired shape. A mold can include a body having a planar base portion having a rounded periphery, the base portion having an inside surface for receipt of the disc, an annular sidewall portion which extends upwardly and radially outwardly from the rounded periphery of the planar base portion and includes a plurality of radially outwardly extending ridges and radially inwardly extending valleys, where it is understood there are complementary male and female components.

### Brief Description of the Drawings

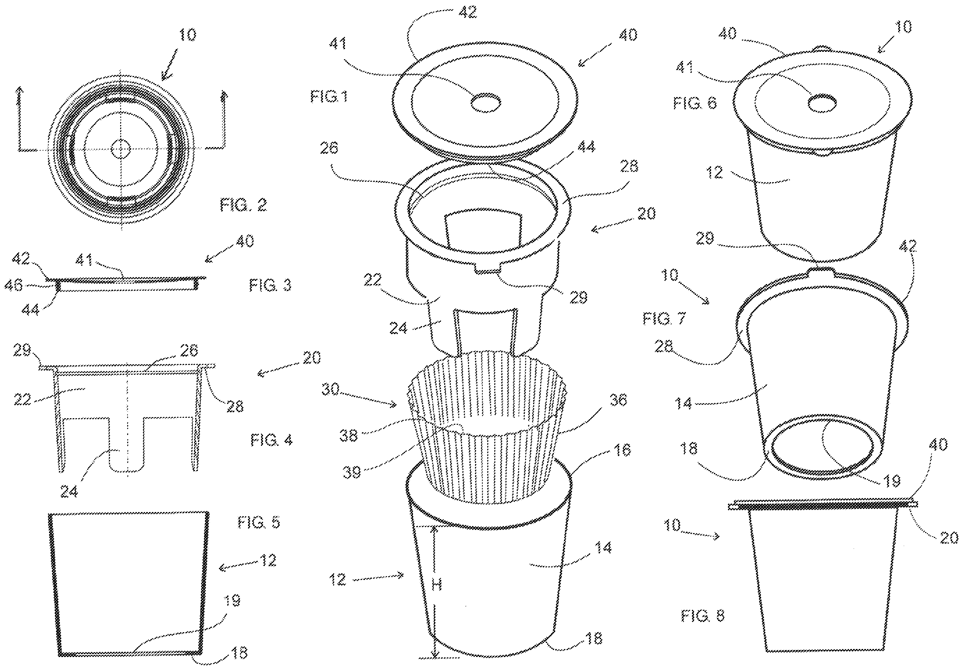

FIG. 1 shows a perspective exploded view of the invention.
FIG. 2 shows a top view of the invention with hidden lines.
FIG. 3 shows a side sectional view through a top of the invention.
FIG. 4 shows a side sectional view through an insert of the invention.
FIG. 5 shows a side sectional view through a basket retainer of the invention.
FIG. 6 shows a top perspective view of the invention.
FIG. 7 shows a bottom perspective view of the invention.
FIG. 8 shows a side view of the invention.

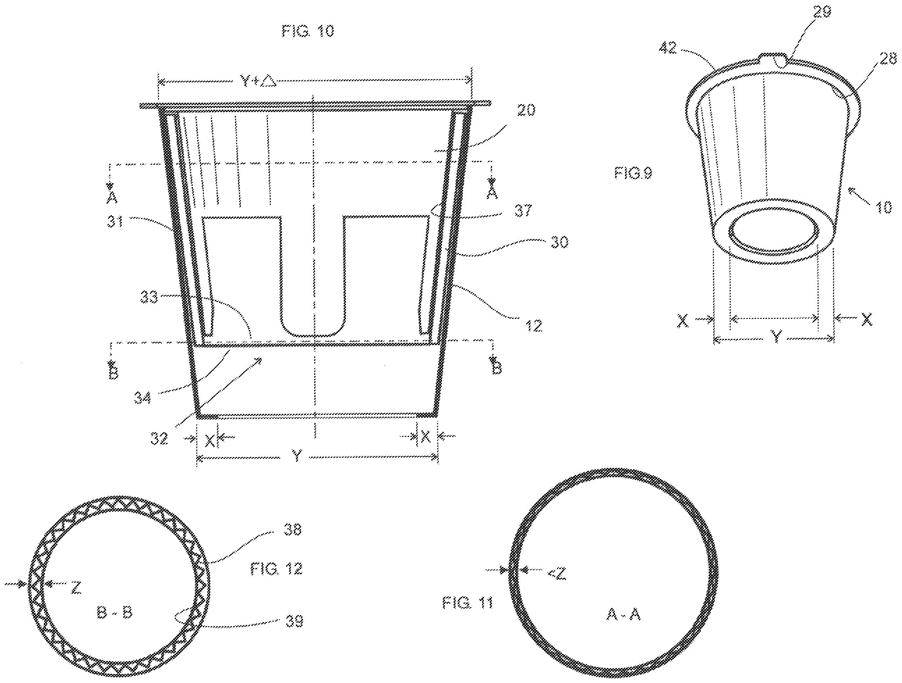

FIG. 9 shows another bottom perspective view of the invention.
FIG. 10 shows a cross section of part of the filter of the invention as disposed in press-fit relation within the insert and retainer of the invention.
FIG. 11 shows a cross section through line A-A of Fig. 10.
FIG. 12 shows a cross section through line By of Fig. 10.

### Detailed Description of Preferred Embodiments

Referring now to the drawings, a single cup beverage ingredient filter basket is generally referred to by the numeral 10. The basket 10 includes a filter retainer 12 having an outer shell 14 with an upper end 16 having open top and a bottom 18 including a generally centrally located opening 19 therein. The shell 14 has a predetermined height H, which can be a length of about 1.5 inches. The bottom 18, the bottom 18 which is the form of an annular ring of a radial length X. The opening 19 is preferably large enough to permit insertion of one's finger therethrough. The diameter of the bottom 18 is a predetermined diameter Y which can preferably be about less than about 1.5 inch for the case of a K-cup alternative. The upper end 16 is predetermined diameter Y+Δ which is greater than Y. In this way, the outer shell is tapered.

An insert 20 is provided having an upper collar 22 of a less than the diameter of the upper end 16 of the retainer 12 to fit therein and has a lower extension 24 (which can include a plurality of fingers). The collar 22 and extension 24 are integral and form a taper in spaced relation to the shell 14. In the shown embodiment, the extension 24 form legs which leave gaps therebetween to enhance fluid flow therethrough.

In this way, a filter 30 can be generally cup shaped and disposed between the retainer 12 and the insert 20 such that the insert 20 press-fits the filter 30 within the retainer 12 to retain the filter 30 adjacent the retainer shell 14 as described herein. The filter 30 can preferably be at least about 30-32 pound basis weight and has a substantially plantar base portion 32 having a generally rounded periphery. The base portion 32 has an inside surface 33 for receipt of beverage forming ingredient and an outside surface 34. The filter 30 has a substantially annular sidewall portion 36 which extends upwardly and radially outwardly from the rounded periphery of the planar base portion 32, the annular sidewall portion 36 having an inner surface 37 for receipt of beverage forming ingredient and an outer surface 31 for disposal against the shell 14. The base portion 32 can be less than the diameter of the Y diameter of the outer shell 14, for example, less than 1.5" for example for K-cup alternative. The length of the sidewall 36 should be less than the height H of the outer shell 14, less than 1.5" for example for K-cup alternative.

The annular sidewall 36 includes a plurality of ridges 38 extending radially outwardly and valleys 39 extending radially inwardly. The ridges 38 and valleys 39 are separated by a distance Z , for example less than about 2-3 mm for example when formed. The plurality of ridges 38 and valleys 39 cooperate when press-fit between the insert 20 and retainer 12 to enhance the flowability of liquid through the filter 30. As illustrated in FIG.s 10 and 11, the filter 30 when inserted between the insert 20 and retainer 12, is sufficiently compressed to enable self retention, but not so much as to inhibit fluid flow. The ridges 38 and valleys 39 are separated by a predetermined distance Z which is greater than zero and less than 0.5 cm and the insert 20 has an external diameter less than an internal diameter of the retainer 12 and wherein when the insert 12 is within the retainer 20, the insert 12 is diametrically separated from retainer 20 less than distance Z and greater than zero. The FIG. 12 illustrates the filter 30 in uncompressed area.

The filter 30 can preferably be made of cellulose fiber from chemically prepared wood from a wet crepe filter paper machine strength and flow rate. The filter 30 should be of a strength to withstand high pressure and heat from water injection from single cup coffee makers. Further, the upper collar 22 can preferably include a peripheral lip 28 of a diameter at least that of the upper end 16 of the retainer 12 and preferably larger, to aid in removal of the insert 20. The peripheral lip 28 can include a tab 29 (or optionally a cut-off edge) to aid in separation from lip portion 42 of removable top 40. In this regard, the lip 28 can be slight smaller than the diameter of lip portion 42 while the tabs 29 extend laterally outward greater diametrically than the diameter of the lip portion 42. The lip 28 has a diameter of at least that of (and preferably greater than) the diameter of the upper end 16 of the retainer 12

Removable top 40 is provided has outer perimeter lip portion 42 with a diameter of at least that of (and preferably greater than) the diameter of the upper end 16 of the retainer 12 and has a lower collar portion 44 of a diameter less than the diameter of the upper collar 16 and configured to press-fit therein to secure it to the insert 20. The removable top 40 has an opening 41 therethrough which can preferably be centrally located and which is of a size to receive a water delivery conduit therethrough in a substantially seal tight manner to prevent water backing out the opening in top 40. In this regard a seal (not shown) may be provided about the conduit to abut about the opening 41 and conduit to prevent back flow.

Further, the lower collar portion 44 of the top 40 and the collar 22 of the insert 20 can be formed with a complementary detent mechanism to snap fit together and secure the two together for use and removal. By way of example, the collar portion 44 can include a radial protrusion 46 and the collar 22 can include an inner radial recess surface 26 to form the snap-fit relation. While tab 29 is shown, it is contemplated that an edge of either of the peripheral lip 28 of the insert 20 or the lip portion 42 of the top 40 can be recessed or extended to aid in separation of the two once connected.

The filter 30 can be formed by die stretching in a manner to set the filters in the desired shape. A mold can include a body having a planar base portion having a rounded periphery, the base portion having an inside surface for receipt of the disc, an annular sidewall portion which extends upwardly and radially outwardly from the rounded periphery of the plantar base portion and includes a plurality of radially outwardly extending ridges and radially inwardly extending valleys, where it is understood there are complementary male and female components.

## Claims

1. A single cup beverage ingredient containing filter basket (10) for use in a single cup brewing machine, comprising:
a filter retainer (12) having an upper end (16) with an open top and a bottom end including an opening (19) therein;
an insert (20) having an upper collar (22) having a diameter less than that of said upper end of the said retainer to fit therein and having a lower extension (24) which is dimensionally proportioned to press-fit a filter (30) disposed between the filter retainer and the insert, within the said filter retainer to retain the filter between the said insert and said filter retainer yet not so tight between the insert and retainer as to substantially restrict fluid flow through sides of the filter and cause undue pressure on a bottom of the filter in use; and
a top (40) having an outer perimeter lip portion (42) of a diameter and configuration positionable to form a closure about the said upper end (16) of the said filter retainer when disposed thereagainst.

2. The single cup beverage ingredient containing filter basket of claim 1, wherein said top is removable and has a lower collar portion (44) of a diameter less than the diameter of the said upper collar of the said insert and configured to press-fit and to removably secure to said insert, and wherein the said top has an opening (41) therethrough.

3. The single cup beverage ingredient containing filter basket of claim 1, wherein the said insert includes a lip portion (28) having a diameter at least as big as that of said upper end (16) of the said filter retainer.

4. The single cup beverage ingredient containing filter basket of claim 1, wherein the lower extension (24) includes a plurality of fingers.

5. The single cup beverage ingredient containing filter basket of claim 1, wherein the said bottom of the said filter retainer includes an annular collar (18) defining the bottom opening (19) which aids retention of a filter (30) in use.

6. The single cup beverage ingredient containing filter basket of claim 2, wherein the lower collar portion (44) of the top (40) and the collar (22) of the said insert are formed with a complementary detent mechanism to snap fit together and secure the two together for use and removal.

7. The single cup beverage ingredient containing filter basket of claim 3, wherein an edge of one of the lip (28) of the said insert and the lip portion (42) of the said top is one of recessed or extended to aid in separation of the two once connected.

8. The single cup beverage ingredient containing filter basket of claim 3, wherein an edge of one of the lip (28) of the said insert and the lip portion (42) of the said top has one of a tab and cutaway to aid in separation of the two once connected

9. A method of brewing a single cup of coffee comprises the steps of:
providing an electric coffee brewing machine;
providing a single cup beverage ingredient containing filter basket (10) as claimed in claim 2;
disposing a single-use coffee filter (30) between the filter retainer and the insert in a manner to cause the same to be press-fit therebetween;
putting coffee into the filter;
connecting the top to the insert over the retainer such that the lower collar portion press-fits to insert; and
inserting the filter basket into the electric coffee brewing machine and brewing a single cup of coffee with the said electric coffee brewing machine.

10. The method of claim 9. further comprising disassembling the filter basket, removing the filter with coffee therein and discarding the same while retaining the reusable filter basket for reuse.

11. The method of claim 10
, wherein the filter is removed by inserting a user's finger through the bottom opening (19) and pushing out the filter with coffee therein.

12. A single cup beverage ingredient containing filter basket as claimed in any one of claims 1 to 7, in combination with a filter which includes a paper based filter substrate having a substantially planar base portion, the said base portion having an inside surface for receipt of beverage forming ingredient, and an annular sidewall portion which extends upwardly and radially outwardly from a periphery of the planar base portion, the said annular sidewall portion having an inner surface for receipt of beverage forming ingredient and an outside surface for contacting the a retainer and wherein the annular sidewall includes a plurality of ridges extending radially outwardly and valleys extending radially inwardly, wherein the ridges and valleys are separated by a predetermined distance Z which is greater than zero and less than 0.5 cm; ; and wherein the filter is of a sufficient strength that the sidewall, when press-fitted between the retainer and insert, is sufficient to aid in retention of said filter between the retainer and the insert and for holding a beverage forming ingredient therein when subjected to high heat and pressure from a single cup brewer.

13. The combination of claim 12, wherein the insert has an external diameter less than an internal diameter of the retainer and wherein when the insert is within the retainer, the insert is diametrically separated from the retainer less than distance Z and greater than zero.

## Patentansprüche

1. Einzeltassen-Getränkezutat enthaltender Filterkorb (10) zur Verwendung in einer Einzeltassen-Brühmaschine, aufweisend:
einen Filterhalter (12) mit einem oberen Ende (16) mit einer offenen Oberseite und einem unteren Ende, das eine Öffnung (19) darin aufweist;
einen Einsatz (20) mit einem oberen Kragen (22), der einen kleineren Durchmesser als das obere Ende des Halters aufweist, um in diesen zu passen, und der eine untere Verlängerung (24) aufweist, welche dimensionsmäßig angepasst ist, um ein Filter (30), das zwischen dem Filterhalter und dem Einsatz angeordnet ist, im Presssitz aufzunehmen, innerhalb des Filterhalters, um das Filter zwischen dem Einsatz und dem Filterhalter zu halten, jedoch nicht so eng zwischen dem Einsatz und Halter, dass in einem erheblichen Maß Fluidströmung durch Seiten des Filters verhindert und übermäßiger Druck auf einen Boden des Filters im Betrieb ausgeübt wird; und
einen Deckel (4) mit einem Außenrand-Lippenabschnitt (42) mit einem Durchmesser und einer Konfiguration, die ein Positionieren zum Bilden eines Verschlusses am oberen Ende (16) des Filterhalters ermöglichen, wenn er dagegen in Anlage gebracht ist.

2. Einzeltassen-Getränkezutat enthaltender Filterkorb nach Anspruch 1, bei dem der Deckel entfernbar ist und einen unteren Kragenabschnitt (44) aufweist, der einen kleineren Durchmesser als der Durchmesser des oberen Kragens des Einsatzes aufweist und dazu ausgebildet ist, im Presssitz mit dem Einsatz zusammen zu wirken und entfernbar daran gesichert zu sein, und wobei der Deckel eine durchgängige Öffnung (42) aufweist.

3. Einzeltassen-Getränkezutat enthaltender Filterkorb nach Anspruch 1, bei dem der Einsatz einen Lippenabschnitt (28) aufweist, der einen wenigstens so großen Durchmesser wie das obere Ende (16) des Filterhalters aufweist.

4. Einzeltassen-Getränkezutat enthaltender Filterkorb nach Anspruch 1, bei dem die untere Verlängerung (24) eine Mehrzahl von Fingern aufweist.

5. Einzeltassen-Getränkezutat enthaltender Filterkorb nach Anspruch 1, bei dem der Boden des Filterhalters einen ringförmigen Kragen (18) umfasst, der die Bodenöffnung (19) definiert, welche das Halten eines Filters (30) im Betrieb erleichtert.

6. Einzeltassen-Getränkezutat enthaltender Filterkorb nach Anspruch 2, bei dem der untere Kragenabschnitt (44) des Deckels (40) und der Kragen (22) des Einsatzes mit einem komplementären Rastmechanismus ausgebildet sind, um miteinander zu verrasten und die beiden für den Betrieb und das Entfernen zusammen zu halten.

7. Einzeltassen-Getränkezutat enthaltender Filterkorb nach Anspruch 3, bei dem ein Rand entweder der Lippe (28) des Einsatzes oder des Lippenabschnitts (42) des Deckels entweder einen Rücksprung oder einen Vorsprung aufweist, um beim Trennen der beiden zu helfen, sobald diese verbunden sind.

8. Einzeltasse-Getränkezutat enthaltender Filterkorb nach Anspruch 3, bei dem ein Rand entweder der Lippe (28) des Einsatzes oder des Lippenabschnitts (42) des Deckels entweder eine Lasche oder einen Ausschnitt aufweist, um beim Trennen der beiden zu helfen, sobald diese verbunden sind.

9. Verfahren zum Brühen einer Einzeltasse Kaffee mit den Schritten:
Bereitstellen einer elektrischen Kaffeebrühmaschine;
Bereitstellen eines Einzeltassen-Getränkezutat enthaltenden Filterkorbs (10), wie in Anspruch 2 beansprucht;
Anordnen eines Einweg-Kaffeefilters (30) zwischen dem Filterhalter und dem Einsatz, sodass dieser dazwischen im Presssitz angeordnet ist;
Einfüllen von Kaffee in das Filter;
Verbinden des Deckels mit dem Einsatz über dem Halter, sodass der untere Kragenabschnitt mit dem Einsatz im Presssitz zusammenwirkt; und
Einsetzen des Filterkorbs in die elektrische Kaffeebrühmaschine und Brühen einer Einzeltasse Kaffee mit der elektrischen Kaffeebrühmaschine.

10. Verfahren nach Anspruch 9, weiter beinhaltend ein Zerlegen des Filterkorbs, Entfernen des Filters mit darin befindlichem Kaffee und Entsorgen desselben, während der wiederverwendbare Filterkorb zur Wiederverwendung zurückbehalten wird.

11. Verfahren nach Anspruch 10, bei dem das Filter entfernt wird, indem der Finger eines Benutzers durch die Bodenöffnung (19) eingeführt und der Filter mit darin befindlichem Kaffee herausgedrückt wird.

12. Einzeltassen-Getränkezutat enthaltender Filterkorb, wie in einem der Ansprüche 1 bis 7 beansprucht, in Verbindung mit einem Filter, welches ein Filtersubstrat auf Papierbasis umfasst, das einen im Wesentlichen ebenen Basisabschnitt aufweist, welcher Basisabschnitt eine Innenoberfläche umfasst zum Aufnehmen einer Getränk bildenden Zutat, und einen ringförmigen Seitenwandabschnitt, der sich nach oben und radial nach außen von einem Rand des ebenen Basisabschnitts erstreckt, welcher ringförmige Seitenwandabschnitt eine Innenoberfläche zum Aufnehmen einer Getränk bildenden Zutat und eine Außenoberfläche zum Kontaktieren des eines Halters aufweist, wobei die ringförmige Seitenwand eine Mehrzahl von Rippen aufweist, die sich radial auswärts erstrecken, und Rinnen, die sich radial einwärts erstrecken, wobei die Rippen und Rinnen um eine vorbestimmte Distanz Z voneinander beabstandet sind, die größer als Null und kleiner als 0,5 cm ist; und wobei das Filter eine hinreichende Stärke aufweist, sodass die Seitenwand, wenn sie sich im Presssitz zwischen dem Halter und dem Einsatz befindet, ausreichend ist, um beim Halten des Filters zwischen dem Halter und dem Einsatz behilflich zu sein und um eine Getränk bildende Zutat bei Beaufschlagung mit großer Hitze und Druck von einem Eintassen-Brüher darin zu halten.

13. Die Kombination nach Anspruch 12, bei der der Einsatz einen äußeren Durchmesser aufweist, der kleiner ist als ein innerer Durchmesser des Halters, und bei der dann, wenn der Einsatz sich innerhalb des Halters befindet, der Einsatz in Richtung des Durchmessers von dem Halter getrennt ist um weniger als den Abstand Z und mehr als Null.

## Revendications

1. Panier-filtre (10) contenant un ingrédient de boisson pour une seule tasse pour une utilisation dans une machine d'infusion d'une seule tasse, comprenant :
un élément de retenue de filtre (12) ayant une extrémité supérieure (16) présentant une partie supérieure ouverte et une extrémité inférieure comportant une ouverture (19) dans celle-ci ;
un insert (20) ayant un collier supérieur (22) présentant un diamètre inférieur à celui de ladite extrémité supérieure dudit élément de retenue pour s'ajuster dans celui-ci et ayant une extension inférieure (24) qui est dimensionnellement proportionnée pour ajuster par pression un filtre (30), disposé entre l'élément de retenue de filtre et l'insert, dans ledit élément de retenue de filtre pour retenir le filtre entre ledit insert et ledit élément de retenue de filtre mais pas si serré entre l'insert et l'élément de retenue qu'il limite sensiblement l'écoulement de fluide à travers les côtés du filtre et provoque une pression excessive sur une partie inférieure du filtre lors de l'utilisation ; et
une partie supérieure (40) ayant une partie de lèvre périphérique extérieure (42) présentant un diamètre et une configuration pouvant être positionnés pour former une fermeture autour de ladite extrémité supérieure (16) dudit élément de retenue de filtre lorsqu'elle est disposée contre celui-ci.

2. Panier-filtre contenant un ingrédient de boisson pour une seule tasse de la revendication 1, dans lequel ladite partie supérieure est amovible et a une partie de collier inférieur (44) présentant un diamètre inférieur au diamètre dudit collier supérieur dudit insert et configurée pour s'ajuster par pression et se fixer de manière amovible audit insert, et où ladite partie supérieure a une ouverture (41) à travers celle-ci.

3. Panier-filtre contenant un ingrédient de boisson pour une seule tasse de la revendication 1, dans lequel ledit insert comporte une partie de lèvre (28) ayant un diamètre au moins aussi grand que celui de ladite extrémité supérieure (16) dudit élément de retenue de filtre.

4. Panier-filtre contenant un ingrédient de boisson pour une seule tasse de la revendication 1, dans lequel l'extension inférieure (24) comporte une pluralité de doigts.

5. Panier-filtre contenant un ingrédient de boisson pour une seule tasse de la revendication 1, dans lequel ladite partie inférieure dudit élément de retenue de filtre comporte un collier annulaire (18) définissant l'ouverture inférieure (19) qui aide à retenir un filtre (30) lors de l'utilisation.

6. Panier-filtre contenant un ingrédient de boisson pour une seule tasse de la revendication 2, dans lequel la partie de collier inférieur (44) de la partie supérieure (40) et le collier (22) dudit insert sont formés avec un mécanisme d'encliquetage complémentaire pour s'encliqueter ensemble et pour fixer les deux ensembles pour l'utilisation et le retrait.

7. Panier-filtre contenant un ingrédient de boisson pour une seule tasse de la revendication 3, dans lequel un bord de l'une de la lèvre (28) dudit insert et de la partie de lèvre (42) de ladite partie supérieure est en retrait ou étendu pour aider à la séparation des deux une fois reliés.

8. Panier-filtre contenant un ingrédient de boisson pour une seule tasse de la revendication 3, dans lequel un bord de l'une de la lèvre (28) dudit insert et de la partie de lèvre (42) de ladite partie supérieure a une languette ou une découpe pour aider à la séparation des deux une fois reliés.

9. Procédé d'infusion d'une seule tasse de café comprenant les étapes qui consistent :
à fournir une machine à café électrique ;
à fournir un panier-filtre (10) contenant un ingrédient de boisson pour une seule tasse tel que revendiqué dans la revendication 2 ;
à disposer un filtre à café à usage unique (30) entre l'élément de retenue de filtre et l'insert de manière à provoquer son ajustement par pression entre ces derniers ;
à mettre du café dans le filtre ;
à relier la partie supérieure à l'insert sur l'élément de retenue de sorte que la partie de collier inférieur s'ajuste par pression à l'insert ; et
à insérer le panier-filtre dans la machine à café électrique et à infuser une seule tasse de café avec ladite machine à café électrique.

10. Procédé de la revendication 9, comprenant en outre le fait de démonter le panier-filtre, de retirer le filtre avec le café dans celui-ci et de jeter celui-ci tout en conservant le panier-filtre réutilisable pour une réutilisation.

11. Procédé de la revendication 10, dans lequel le filtre est retiré en insérant un doigt de l'utilisateur à travers l'ouverture inférieure (19) et en poussant le filtre avec le café dans celui-ci.

12. Panier-filtre contenant un ingrédient de boisson pour une seule tasse tel que revendiqué dans l'une quelconque des revendications 1 à 7, en combinaison avec un filtre qui comporte un substrat filtrant en papier ayant une partie de base sensiblement plane, ladite partie de base ayant une surface intérieure pour recevoir un ingrédient de formation de boisson, et une partie de paroi latérale annulaire qui s'étend vers le haut et radialement vers l'extérieur à partir d'une périphérie de la partie de base plane, ladite partie de paroi latérale annulaire ayant une surface intérieure pour recevoir un ingrédient de formation de boisson et une surface extérieure pour entrer en contact avec l'élément de retenue et où la paroi latérale annulaire comporte une pluralité de nervures s'étendant radialement vers l'extérieur et de creux s'étendant radialement vers l'intérieur, où les nervures et les creux sont séparés par une distance prédéterminée Z qui est supérieure à zéro et inférieure à 0,5 cm ; et où le filtre a une résistance suffisante pour que la paroi latérale, lorsqu'elle s'ajuste par pression entre l'élément de retenue et l'insert, soit suffisante pour aider à retenir ledit filtre entre l'élément de retenue et l'insert et maintenir un ingrédient de formation de boisson dans celui-ci lorsqu'il est soumis à une chaleur et une pression élevées d'un infuseur d'une seule tasse.

13. Combinaison de la revendication 12, dans laquelle l'insert a un diamètre externe inférieur à un diamètre interne de l'élément de retenue et où, lorsque l'insert se trouve dans l'élément de retenue, l'insert est diamétralement séparé de l'élément de retenue par une distance inférieure à la distance Z et supérieure à zéro.
